# EUROPEAN PATENT APPLICATION

(11) **EP 0 875 835 A2**
(43) Date of publication of application: **04.11.1998**
(21) Application number: 98303269.9
(22) Date of filing: 28.04.1998
(51) Int. Cl.: G06F 13/40, G06F 13/10

(54) **Electronic circuit common to various types of processing unit, method and program storage device for controlling the same**

(30) Priority: 28.04.1997 JP 109978/97
(71) Applicant: TEIJIN SEIKI COMPANY LIMITED, Osaka (JP)
(72) Inventor: Chiba, Takahiro, c/o Gifu Plant No. 1, Miyashiro, Tarui-cho, Fuwa-gun, Gifu (JP)
(74) Representative: Murnane, Graham John

(57) **Abstract**

Herein disclosed is an electronic circuit (100; 200, 210, 250; 500, 300, 400) common to various types of processing unit, and a method of and a program storage device for controlling the same. The electronic circuit (100; 200, 210, 250; 500, 300, 400) according to the present invention comprises a processing unit (101, 111; 211, 251; 301, 401) being capable of issuing a predetermined control signal to the peripheral unit (102, 103, 104; 202, 203, 204; 302, 303, 304, 402, 403, 404). The electronic circuit (100; 200, 210, 250; 500, 300, 400) further comprises: conversion means (120; 220, 270; 320, 420) for receiving the control signal from the processing unit (101, 111; 211, 251; 301, 401) and converting the received control signal into a signal having a format compatible with the peripheral unit (102, 103, 104; 202, 203, 204; 302, 303, 304, 402, 403, 404); and accessing means (120; 220, 270; 320, 420) for accessing and controlling the peripheral unit (102, 103, 104; 202, 203, 204; 302, 303, 304, 402, 403, 404) in accordance with the signal converted by the conversion means (120; 220, 270; 320, 420). The electronic circuit (100; 200, 210, 250; 500, 300, 400) thus constructed has resources recycled for another electronic circuit without efforts, thereby making it possible to reduce complicated processes of constructing and testing the electronic circuit (100; 200, 210, 250; 500, 300, 400).

## Description

### BACKGROUND OF THE INVENTION

### 1. Field of the Invention

The present invention relates to an electronic circuit common to various types of processing unit, a method of and a program storage device stored with a program for controlling the same electronic circuit. In more particular, the present invention relates to an electronic circuit having resources, which can be recycled for another electronic circuit without efforts, thereby making it possible to reduce complicated processes of constructing and testing the electronic circuit under development.

### 2. Description of the Related Art

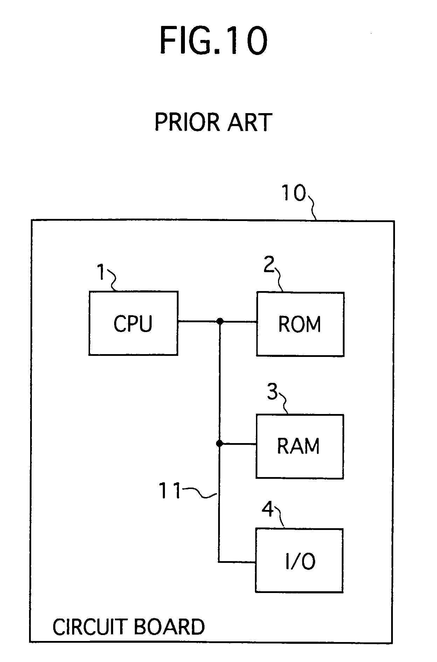

There have so far been proposed a wide variety of electronic circuits one typical example of which comprises a specific central processing unit CPU and a predetermined peripheral unit electrically connected to the CPU. The CPU accesses and controls the peripheral unit to perform a variety of functions. FIG. 10 shows a typical conventional electronic circuit accommodated in a circuit board 10 and comprising a CPU 1, a read only memory ROM 2, a random access memory RAM 3 and an input-output unit (hereinlater referred to simply as "I/O") 4. The ROM 2, the RAM 3 and the I/O 4 are as a whole referred to as "a peripheral unit".

As shown in FIG. 10, the CPU 1 is electrically coupled with the peripheral unit through an internal bus 11, so that the CPU 1 can access and control the peripheral unit through the internal bus 11. The electronic circuit is designed to make the CPU 1 execute a predetermined program to perform desired functions in cooperation with the peripheral unit. The ROM 2 has previously stored the program to be executed by the CPU 1. The RAM 3 is accessed by the CPU 1 to serve as a work area for the execution of the program. The I/O 4 is accessed and controlled by the CPU 1 through the internal bus 11 to input and output data to and from an external device (not shown) electronically connected with the I/O 4.

It is generally known that various kinds of CPU have been developed in recent years. The generation of the CPU is altered in rapid succession. Furthermore, a lot of labor processes of testing and debugging the conventional electronic circuit under development are required in order to completely achieve the desired functions.

A drawback encountered in the conventional electronic circuit of the above described nature is that the conventional electronic circuit must be made a fresh start as a whole in the composition of the electronic circuit, even when the CPU is only changed to a new one, because of the fact that in the conventional electronic circuit a CPU is useful for a specific peripheral unit. In other words, even when the electronic circuit including a previous generation CPU has a wealth of resource, the resource of the electronic circuit cannot be used for another electronic circuit including a new generation CPU.

### SUMMARY OF THE INVENTION

It is an object of the present invention to provide an electronic circuit common to various types of processing unit. The electronic circuit has resources, which can be recycled for another electronic circuit without efforts, thereby making it possible to reduce complicated processes of constructing and testing the electronic circuit under development.

It is another object of the present invention to provide a method of controlling an electronic circuit common to various types of processing unit. The electronic circuit has resources, which can be recycled for another electronic circuit without efforts, thereby making it possible to reduce complicated processes of constructing and testing the electronic circuit under development.

It is a further object of the present invention to provide a program storage device for storing a program executed by a computer to perform a method of controlling an electronic circuit common to various types of processing unit. The electronic circuit has resources, which can be recycled for another electronic circuit without efforts, thereby making it possible to reduce complicated processes of constructing and testing the electronic circuit under development.

In accordance with a first aspect of the present invention, there is provided an electronic circuit common to various types of processing unit. The electronic circuit comprises: a processing unit being capable of issuing a predetermined control signal to a peripheral unit; conversion means for receiving the control signal from the processing unit and converting the received control signal into a signal having a format compatible with the peripheral unit; and accessing means for accessing and controlling the peripheral unit in accordance with the signal converted by the conversion means.

The electronic circuit may further comprise communication means for allowing the peripheral unit to communicate with another processing unit, which is accommodated in an external electronic circuit. Alternatively, the electronic circuit may further comprise communication means for allowing the processing unit to communicate with another peripheral unit, which is accommodated in an external electronic circuit.

In accordance with a second aspect of the present invention, there is provided an electronic circuit common to various types of processing unit. The electronic circuit comprises: a first processing unit being capable of issuing a first predetermined control signal to a peripheral unit to access and control the peripheral unit in accordance with the first control signal; a second processing unit being capable of issuing a second predetermined control signal; conversion means for receiving the second control signal from the second processing unit and converting the received second control signal into a signal having a format compatible with the peripheral unit; accessing means for accessing and controlling the peripheral unit in accordance with the signal converted by the conversion means; and selecting means for selecting one from among the first and second processing units to access and control the peripheral unit. When the first processing unit is selected by the selecting means, the selected first processing unit directly accesses and controls the peripheral unit. When the second processing unit is selected by the selecting means, the accessing means accesses and controls the peripheral unit.

The electronic circuit may further comprise communication means for allowing the peripheral unit to communicate with the second processing unit, which is accommodated in an external electronic circuit.

In accordance with a third aspect of the present invention, there is provided an electronic circuit common to various types of processing unit. The electronic circuit comprises: a processing unit being capable of issuing a predetermined control signal to a first peripheral unit to access and control the first peripheral unit in accordance with the first control signal; communication means for allowing the processing unit to communicate with a second peripheral unit accommodated in an external electronic circuit; conversion means for receiving the control signal from the processing unit and converting the received control signal into a signal having a format compatible with the second peripheral unit; accessing means for accessing and controlling the second peripheral unit in accordance with the converted signal; and selecting means for selecting one from among the first and second peripheral units to be accessed and controlled by the processing unit. When the first peripheral unit is selected by the selecting means, the selected first peripheral unit is directly accessed and controlled by the processing unit. When the second peripheral unit is selected by the selecting means, the selected second peripheral unit is accessed and controlled by the accessing means.

In accordance with a fourth aspect of the present invention, there is provided a method of controlling an electronic circuit common to various types of processing unit. The electronic circuit comprises a processing unit being capable of issuing a predetermined control signal to a peripheral unit. The method comprises the steps of:
(a) receiving the control signal from the processing unit;
(b) converting the control signal received in the step (a) into a signal having a format compatible with the peripheral unit; and
(c) accessing and controlling the peripheral unit in accordance with the signal converted in the step (b).

The method may further comprise the step of allowing the peripheral unit to communicate with a processing unit, which is accommodated in an external electronic circuit. Alternatively, the method may further comprise the step of allowing the processing unit to communicate with another peripheral unit, which is accommodated in an external electronic circuit.

In accordance with a fifth aspect of the present invention, there is provided a method of controlling an electronic circuit common to various types of processing unit. The electronic circuit comprises: a first processing unit being capable of issuing a first predetermined control signal to a peripheral unit to access and control the peripheral unit in accordance with the first control signal; and a second processing unit capable of issuing a second predetermined control signal. The method comprises the steps of:
(a) receiving the second control signal from the second processing unit;
(b) converting the second control signal received in the step (a) into a signal having a format compatible with the peripheral unit;
(c) selecting one from among said first and second processing units to access and control said peripheral unit;
(d) directly accessing and controlling the peripheral unit in accordance with the first control signal, when the first processing unit is selected in the step (c); and
(e) accessing and controlling the peripheral unit in accordance with the signal converted in the step (b), when the second processing unit is selected in the step (c).

The method may further comprise the step of allowing the peripheral unit to communicate with the second processing unit, which is accommodated in an external electronic circuit.

In accordance with a sixth aspect of the present invention, there is provided a method of controlling an electronic circuit common to various types of processing unit. The electronic circuit comprises a processing unit being capable of issuing a predetermined control signal to a first peripheral unit to access and control the first peripheral unit in accordance with the first control signal. The method comprises the steps of:
(a) allowing the processing unit to communicate with a second peripheral unit accommodated in an external electronic circuit;
(b) receiving the control signal from the processing unit;
(c) converting the control signal received in the step (b) into a signal having a format compatible with the second peripheral unit;
(d) selecting one from among the first and second peripheral units to be accessed and controlled by the processing unit;
(e) directly accessing and controlling the first peripheral unit in accordance with the first control signal, when the first peripheral unit is selected in the step (d); and
(f) accessing and controlling the second peripheral unit in accordance with the signal converted in the step (b), when the second peripheral unit is selected in the step (d).

In accordance with a seventh aspect of the present invention, there is provided a program storage device stored with a program executed by a computer to perform a method of controlling an electronic circuit common to various types of processing unit. The electronic circuit comprises a processing unit being capable of issuing a predetermined control signal to a peripheral unit. The program comprises the steps of:
(a) receiving the control signal from the processing unit;
(b) converting the control signal received in the step (a) into a signal having a format compatible with the peripheral unit; and
(c) accessing and controlling the peripheral unit in accordance with the signal converted in the step (b).

In the program storage device, the program may further comprise the step of allowing the peripheral unit to communicate with a processing unit, which is accommodated in an external electronic circuit. In the program storage device, the program may further comprise the step of allowing the processing unit to communicate with another peripheral unit, which is accommodated in an external electronic circuit.

In accordance with an eighth aspect of the present invention, there is provided a program storage device stored with a program executed by a computer to perform a method of controlling an electronic circuit common to various types of processing unit. The electronic circuit comprises: a first processing unit being capable of issuing a first predetermined control signal to a peripheral unit to access and control the peripheral unit in accordance with the first control signal; and a second processing unit capable of issuing a second predetermined control signal. The program comprises the steps of:
(a) receiving the second control signal from the second processing unit;
(b) converting the second control signal received in the step (a) into a signal having a format compatible with the peripheral unit;
(c) selecting one from among the first and second processing units to access and control the peripheral unit;
(d) directly accessing and controlling the peripheral unit in accordance with the first control signal, when the first processing unit is selected in the step (c); and
(e) accessing and controlling the peripheral unit in accordance with the signal converted in the step (b), when the second processing unit is selected in the step (c).

In the program storage device, the program may further comprise the step of allowing the peripheral unit to communicate with the second processing unit, which is accommodated in an external electronic circuit.

In accordance with a ninth aspect of the present invention, there is provided a program storage device stored with a program executed by a computer to perform a method of controlling an electronic circuit common to various types of processing unit. The electronic circuit comprises a processing unit being capable of issuing a predetermined control signal to a first peripheral unit to access and control the first peripheral unit in accordance with the first control signal. The program comprises the steps of:
(a) allowing the processing unit to communicate with a second peripheral unit accommodated in an external electronic circuit;
(b) receiving the control signal from the processing unit;
(c) converting the control signal received in the step (b) into a signal having a format compatible with the second peripheral unit;
(d) selecting one from among the first and second peripheral units to be accessed and controlled by the processing unit;
(e) directly accessing and controlling the first peripheral unit in accordance with the first control signal, when the first peripheral unit is selected in the step (d); and
(f) accessing and controlling the peripheral unit in accordance with the signal converted in the step (b), when the second peripheral unit is selected in the step (d).

### BRIEF DESCRIPTION OF THE DRAWINGS

The present invention and many of the attendant advantages thereof will be better understood from the following detailed description when considered in connection with the accompanying drawings, wherein:
FIG. 1 is a block diagram of a first preferred embodiment of the electronic circuit according to the present invention;
FIG. 2 is a flowchart showing the flow of procedures for controlling the electronic circuit shown in FIG. 1;
FIG. 3 is a block diagram showing a first example for the use of the electronic circuit shown in FIG. 1;
FIG. 4 is a block diagram showing a second example for the use of the electronic circuit shown in FIG. 1;
FIG. 5 is a block diagram of a second preferred embodiment of the electronic circuit according to the present invention;
FIG. 6 is a block diagram of a sub circuit board, which can be mounted on a main circuit board of the electronic circuit shown in FIG. 5;
FIG. 7 is a block diagram of a third preferred embodiment of the electronic circuit according to the present invention;
FIG. 8 is a block diagram of a first circuit board forming part of the electronic circuit shown in FIG. 7;
FIG. 9 is another block diagram of a second circuit board forming part of the electronic circuit shown in FIG. 7; and
FIG. 10 is a block diagram of a conventional electronic circuit.

### DESCRIPTION OF THE PREFERRED EMBODIMENTS

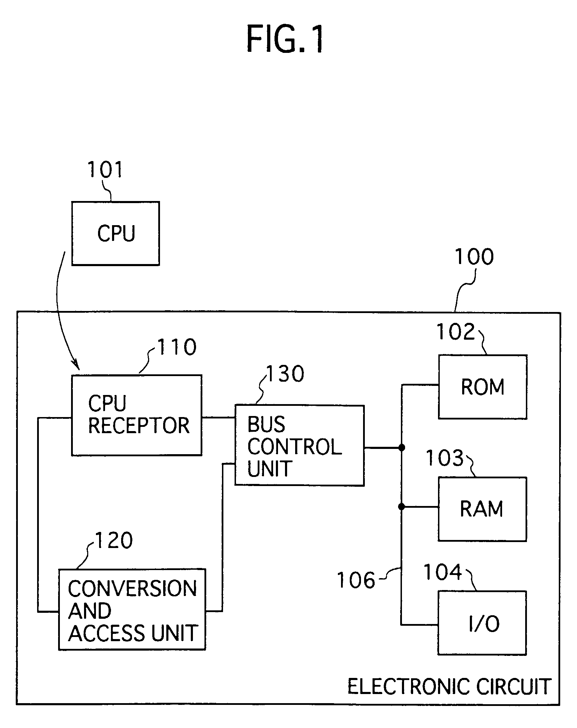

Referring to FIGS. 1 to 4 of the drawings, a first preferred embodiment of an electronic circuit according to the present invention will be explained hereinlater.

As best shown in FIG. 1, the electronic circuit 100 comprises a CPU receptor 110, a ROM 102, a RAM 103, an I/O 104, a conversion and access unit 120 and a bus control unit 130.

The CPU receptor 110 is selectively acceptable to different types of CPU. In FIG. 1, the CPU, which is accepted by the CPU receptor 110, is designated by the reference numeral "101". The ROM 102 has previously stored a predetermined program to be executed by the CPU 101. The RAM 103 is accessed by the CPU 101 to serve as a work area for the execution of the program. The I/O 104 is accessed and controlled by the CPU 101 to input and output data from and to an external device (not shown) electronically connected to the I/O 104. The ROM 102, the RAM 103 and the I/O 104 are collectively referred to as "a peripheral unit" hereinlater.

The CPU receptor 110 is electrically connected to the peripheral unit of the electronic circuit 100 through an internal bus 106, thereby allowing the CPU 101 to communicate with the peripheral unit of the electronic circuit 100. The internal bus 106 has a plurality of buses such as an address bus, a data bus and a control bus, each of the busses having a plurality of lines, but the internal bus 106 is designated in FIG. 1 as a simple line. FIG. 1 merely shows a functional block diagram of the electronic circuit 100. It is not intended to explain in detail how lines of each bus are connected with each other.

The CPU 101 is operable to execute the program to issue a predetermined control signal to the peripheral unit of the electronic circuit 100 in order to perform desired functions in cooperation with the peripheral unit of the electronic circuit 100.

The conversion and access unit 120 is electrically connected to the CPU receptor 110 to receive the control signal from the CPU 101. The conversion and access unit 120 is designed to convert the received control signal into a signal having a format compatible with the peripheral unit of the electronic circuit 100. The conversion and access unit 120 is operable to access and control the peripheral unit of the electronic circuit 100 in accordance with the converted control signal.

The bus control unit 130 is electrically connected to the CPU receptor 110, the conversion and access unit 120 and the peripheral unit of the electronic circuit 100 through the internal bus 106. The bus control unit 130 is designed to select one from among two ways consisting of a first way in which the CPU receptor 110 is directly electrically connected to the peripheral unit of the electronic circuit 100, and a second way in which the CPU receptor 110 is electrically connected to the peripheral unit of the electronic circuit 100 by way of the conversion and access unit 120.

The bus control unit 130 selects the two ways on the basis of whether the CPU 101 is compatible with the peripheral unit of the electronic circuit 100 or not. When the CPU 101 is compatible with the peripheral unit of the electronic circuit 100, the bus control unit 130 selects the first way, so that the peripheral unit of the electronic circuit 100 is directly accessed and controlled by the CPU 101. When the CPU is incompatible with the peripheral unit of the electronic circuit 100, the bus control unit 130 selects the second way, so that the peripheral unit of the electronic circuit 100 is accessed and controlled by the conversion and access unit 120. The bus control unit 130 and the conversion and access unit 120 may be implemented by a programmable device such as a field programmable gate array.

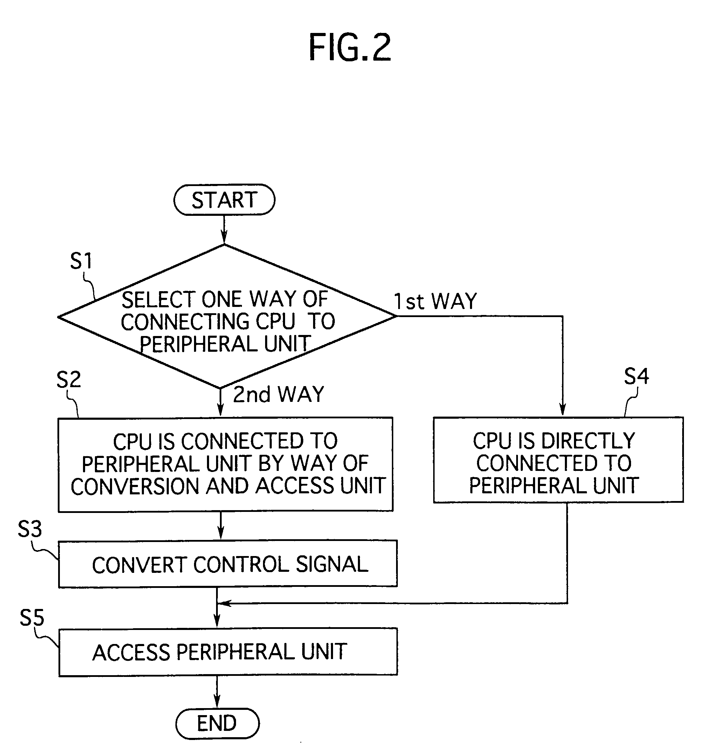

FIG. 2 is an overall outline flowchart showing procedures for controlling the electronic circuit 100 shown in FIG. 1. As best shown in FIG. 2, in the step S1, the bus control unit 130 selects one from among the first and second ways of connecting the CPU 101 to the peripheral unit of the electronic circuit 100. If the bus control unit 130 selects the first way in the step S1, the step S1 is advanced to the step S4, in which the CPU receptor 110 is directly electrically connected to the peripheral unit of the electronic circuit 100. If the bus control unit 130 selects the second way in the step S1, the step S1 is advanced to the step S2, in which the CPU receptor 110 is electrically connected to the peripheral unit of the electric circuit 100 by way of the conversion and access unit 120.

Then, the step S2 is advanced to the step S3, in which the control signal received from the CPU 101 is converted into a signal having a format compatible with the peripheral unit of the electronic circuit 100. The steps S3 and S4 are advanced to the step S5, in which the peripheral unit of the electronic circuit 100 is accessed and controlled. When the step S5 is followed by the step S3, the peripheral unit of the electronic circuit 100 is accessed and controlled by the conversion and access unit 120. When the step S5 is followed by the step S4, the peripheral unit of the electronic circuit 100 is directly accessed and controlled by the CPU 101.

According to the flowchart shown in FIG. 2, the peripheral unit of the electronic circuit 100 is directly accessed and controlled by the CPU 101 in accordance with the control signal when the first way is selected by the bus control unit 130 in the step S1. The peripheral unit of the electronic circuit 100 is accessed and controlled by the conversion and access unit 120 in accordance with the converted control signal when the second way is selected by the bus control unit 130 in the step S1.

The present invention may be provided with a program comprising the same steps as those shown in FIG. 2 executed to perform the aforementioned functions.

The circuit board 100 thus constructed can be used for various types of CPU to perform a desired function in cooperation with the peripheral unit. The operations of the circuit board 100 will be explained in detail hereinlater.

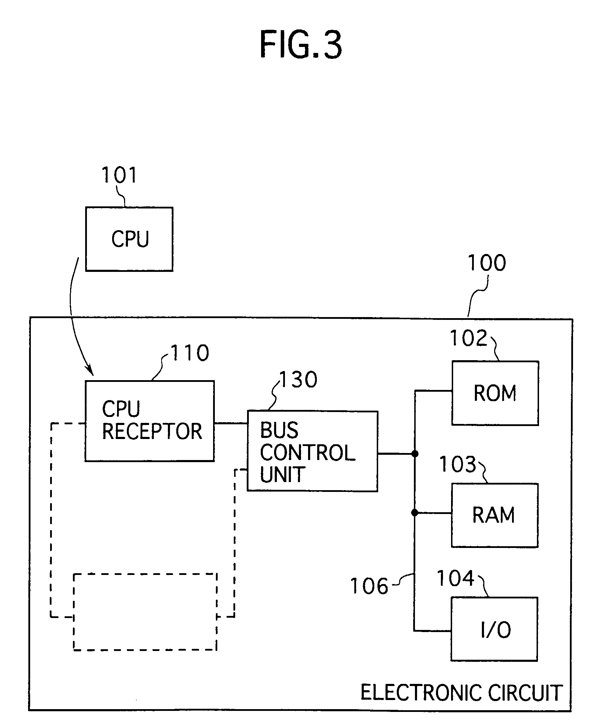

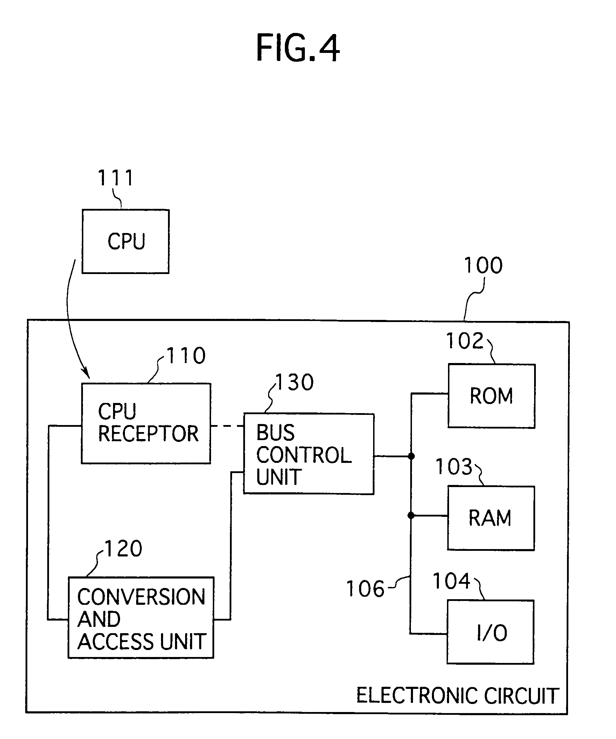

Referring to FIGS. 3 and 4, there are shown two examples for the uses of the electronic circuit 100 shown in FIG. 1. In the first example shown in FIG. 3, the electronic circuit 100 comprises a first CPU 101 capable of issuing a first predetermined control signal having a format compatible with the peripheral unit of the electronic circuit 100. The first CPU 101 is accepted by the CPU receptor 110. In this example, the type of the first CPU 101 is assumed to be a "8086" model. The format of the first control signal is defined as 8 bit data and 20 bit addresses.

Returning back to FIG. 2, since the format of the first CPU 101 is compatible with the peripheral device of the electronic circuit 100, the bus control unit 130 selects the first way in the step S1. Then the step S1 is advanced to the step S4, in which the first CPU 101 is directly electrically connected to the peripheral unit of the electronic circuit 100 through the first internal bus 106. In FIG. 3, the way of electrically connecting the first CPU 101 to the peripheral unit of the electronic circuit 100 is designated as the solid line. The step S4 is advanced to the step S5, in which the peripheral unit of the electronic circuit 100 is directly accessed and controlled by the first CPU 101 in accordance with the first control signal.

In the second example shown in FIG. 4, the electronic circuit 100 comprises a second CPU 111 capable of issuing a second predetermined control signal having a format incompatible with the peripheral unit of the electronic circuit 100. The second CPU 111 is accepted by the CPU receptor 110. In this example, the type of the second CPU 111 is assumed to be a "80186" model. The format of the second control signal is different from that of the first control signal.

Returning back to FIG. 2, the format of the second CPU 111 is incompatible with that of the peripheral unit of the electronic circuit 100, so that the bus control unit 130 selects the second way in the step S1. Then, the step S1 leads to the step S2, in which the second CPU 111 is electrically connected to the peripheral unit of the electric circuit 100 by way of the conversion and access unit 120. In FIG. 4, the way of electrically connecting the second CPU 111 to the peripheral unit of the electronic circuit 100 by way of the conversion and access unit 120 is designated as the solid line.

Then, as shown in FIG. 2, the step S2 is advanced to the step S3. In the step S3, the second control signal is received from the second CPU 111 and the received second control signal is converted into a signal having a format compatible with the peripheral unit of the electronic circuit 100. The converted signal has the same format as that of the first control signal, i.e., 8 bit data and 20 bit addresses. The step S3 is advanced to the step S5, in which the peripheral unit of the electronic circuit 100 is accessed and controlled by the conversion and access unit 120 in accordance with the converted signal. As a result, the second CPU 111 can access and control the peripheral unit of the electronic circuit 100 through the conversion and access unit 120.

It will be understood from the above descriptions that the first embodiment of the electronic circuit according to the present invention has an advantage over the prior art in being useful for various types of CPU, for instance, but not limited to, "8086", "80186", "80286", "68000" and "Pentium" models. In the prior art, a lot of time is required to replace the CPU of the electronic circuit with a new CPU, because of the fact that the electronic circuit including new CPU should be newly constructed and tested as a whole under development. The electronic circuit according to the present invention can facilitate to replace the existing CPU with a new one. Accordingly, the only new CPU should be tested in the peripheral constructions of the CPU of the electronic circuit. Thus, the peripheral unit and resources except for the CPU in the electronic circuit are available for the new CPU. Therefore, the electronic circuit according to the present invention can reduce the processes of constructing and testing the electronic circuit under development.

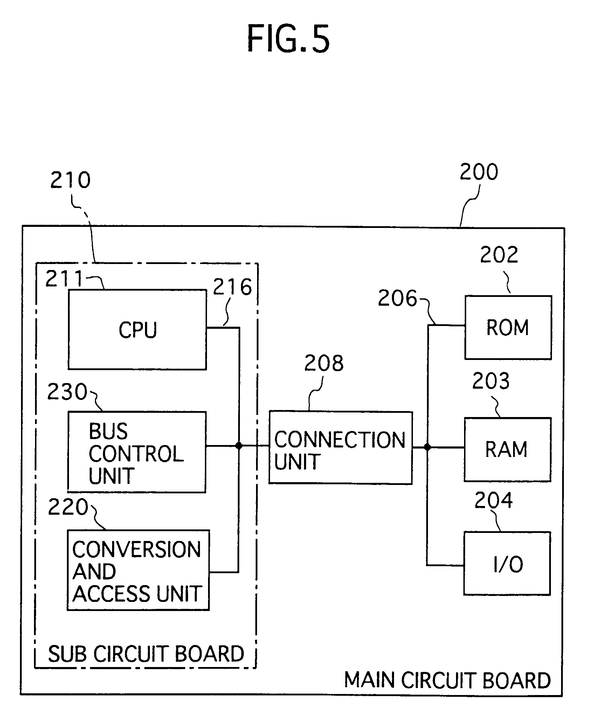

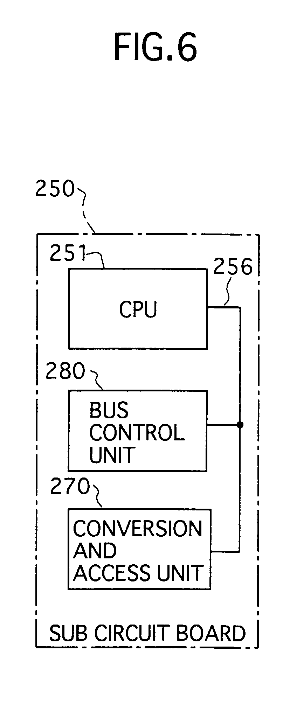

Referring to FIGS. 5 and 6 of the drawings, a second preferred embodiment of the electronic circuit according to the present invention will be explained hereinlater.

As best shown in FIG. 5, the electronic circuit according to the present invention comprises a main circuit board 200 and a sub circuit board 210. The main circuit board 200 comprises a ROM 202, a RAM 203, an I/O 204 and a connection unit 208. The ROM 202, the RAM 203 and the I/O 204 of the main circuit board 200 are electrically connected with each other through an internal bus 206 and collectively referred to as "a peripheral unit" hereinlater. Since the peripheral unit of the main circuit board 200 is the same as that of the electronic circuit 100 of the first embodiment, the detailed explanations of the peripheral unit of the main circuit board 200 are omitted herein. The connection unit 208 of the main circuit board 200 is electrically connected to the main circuit board 200 and a sub circuit board, for instance, the sub circuit board 210 in FIG. 5, so that the peripheral unit of the main circuit board 200 and the connected sub circuit board can be communicated with each other.

As shown in FIG. 5, the sub circuit board 210 comprises a first CPU 211, a conversion and access unit 220 and a bus control unit 230. The first CPU 211, the conversion and access unit 220 and the bus control unit 230 are electrically connected to each other through an internal bus 216. The internal bus 206 has a plurality of buses such as an address bus, a data bus and a control bus, each of the busses having a plurality of lines, but the internal bus 206 is designated in FIG. 5 as a simple line. The internal bus 216 is the same as the internal bus 206. It is intended to explain in detail how lines of each bus are connected with each other in FIG. 5, but merely to show the functional block diagram of the electronic circuit in FIG. 5.

The sub circuit board 210 is mounted on and electrically connected to the main circuit board 200 through the connection unit 208 of the main circuit board 200, therefore, the sub circuit board 210 can communicate with the peripheral unit of the main circuit board 200.

The first CPU 211 of the sub circuit board 210 is operable to execute a predetermined program to issue a first predetermined control signal to a predetermined peripheral unit in order to perform desired functions in cooperation with the peripheral unit.

The conversion and access unit 220 of the sub circuit board 210 is designed to receive the first control signal from the first CPU 211 of the sub circuit board 210 and convert the received first control signal into a signal having a format compatible with the peripheral unit of the main circuit board 200. The conversion and access unit 220 of the sub circuit board 210 is operable to access and control the peripheral unit of the main circuit board 200 in accordance with the converted control signal.

The bus control unit 230 of the sub circuit board 210 is designed to select one from among two ways consisting of a first way in which the first CPU 211 of the sub circuit board 210 is directly electrically connected to the connection unit 208 of the main circuit board 200 to communicate with the peripheral unit of the main circuit board 200, and a second way in which the first CPU 211 of the sub circuit board 210 is electrically connected to the connection unit 208 of the main circuit board 200 by way of the conversion and access unit 220 of the sub circuit board 210 to communicate with the peripheral unit of the main circuit board 200.

The bus control unit 230 of the sub circuit board 210 selects the two ways on the basis of whether the CPU 211 of the sub circuit board 210 is compatible with the peripheral unit of the main circuit board 200 or not. When the CPU 211 of the sub circuit board 210 is compatible with the peripheral unit of the main circuit board 200, the bus control unit 230 of the sub circuit board 210 selects the first way, so that the peripheral unit of the main circuit board 200 is directly accessed and controlled by the CPU 211 of the sub circuit board 210. When the CPU 211 of the sub circuit board 210 is incompatible with the peripheral unit of the main circuit board 200, the bus control unit 230 of the sub circuit board 210 selects the second way, so that the peripheral unit of the main circuit board 200 is accessed and controlled by the conversion and access unit 220 of the sub circuit board 210. The bus control unit 230 and the conversion and access unit 220 of the sub circuit board 210 may be implemented by a programmable device such as a field programmable gate array.

In this embodiment, there is provided another sub circuit board 250 to be mounted on the main circuit board 200 through the connection unit 208 of the main circuit board 200 as shown in FIG. 6. The sub circuit board 250 comprises a second CPU 251, the type of which is different from that of the first CPU 211 of the sub circuit board 210, a conversion and access unit 270 and a bus control unit 280. The type of the second CPU 251 is assumed to be a "Pentium" model in this embodiment.

The second CPU 251 of the sub circuit board 250 is operable to execute a predetermined program to issue a second predetermined control signal to a predetermined peripheral unit in order to perform desired functions in cooperation with the peripheral unit. The second control signal has a different format from that of the first control signal.

The conversion and access unit 270 of the sub circuit board 250 is designed to receive the second control signal from the second CPU 251 of the sub circuit board 250 and convert the received second control signal into a signal having a format compatible with the peripheral unit of the main circuit board 200. The conversion and access unit 270 of the sub circuit board 250 is operable to access and control the peripheral unit of the main circuit board 200 in accordance with the converted signal.

The bus control unit 280 of the sub circuit board 250 is designed to select one from among two ways consisting of a first way in which the second CPU 251 of the sub circuit board 250 is electrically connected to the connection unit 208 of the main circuit board 200 to communicate with the peripheral unit of the main circuit board 200 through, and a second way in which the second CPU 251 of the sub circuit board 250 is electrically connected to the connection unit 208 of the main circuit board 200 by way of the conversion and access unit 270 of the sub circuit board 250 to communicate with the peripheral unit of the main circuit board 200.

The bus control unit 280 of the sub circuit board 250 selects the two ways on the basis of whether the CPU 251 of the sub circuit board 250 is compatible with the peripheral unit of the main circuit board 200 or not. When the CPU 251 of the sub circuit board 250 is compatible with the peripheral unit of the main circuit board 200, the bus control unit 280 of the sub circuit board 250 selects the first way, so that the peripheral unit of the main circuit board 200 is directly accessed and controlled by the CPU 251 of the sub circuit board 250. When the CPU 251 of the sub circuit board 250 is incompatible with the peripheral unit of the main circuit board 200, the bus control unit 280 of the sub circuit board 250 selects the second way, so that the peripheral unit of the main circuit board 200 is accessed and controlled by the conversion and access unit 220 of the sub circuit board 250. The bus control unit 280 and the conversion and access unit 270 of the sub circuit board 250 may be also implemented by a programmable device such as a field programmable gate array.

The operation of the second embodiment of the electronic circuit will be explained hereinlater. In this embodiment, the first CPU 211 of the sub circuit board 210 is assumed to be compatible with the peripheral unit of the main circuit board 200. This means that the peripheral unit of the main circuit board 200 can be accessed and controlled by the first CPU 211 of the sub circuit board 210 in accordance with the first control signal. Since it is unnecessary to convert the first control signal, the bus control unit 230 of the sub circuit board 210 selects the first way when the sub circuit board 210 is mounted on the main circuit board 200. In the first way, the first CPU 211 of the sub circuit board 220 is directly electrically connected to the connection unit 208 of the main circuit board to communicate with the peripheral unit of the main circuit board 200. Then, the peripheral unit of the main circuit board 200 is directly accessed and controlled by the first CPU 211 of the sub circuit board 210 in accordance with the first control signal.

On the other hand, the second CPU 251 of the sub circuit board 250 is assumed to be incompatible with the peripheral unit of the main circuit board 200. This means that the second control signal should be converted to a signal having a format compatible with the peripheral unit of the main circuit board 200. Accordingly, the bus control unit 270 of the sub circuit board 250 selects the second way when the sub circuit board 250 is mounted on the main circuit board 200. In the second way, the second CPU 251 of the sub circuit board 250 is electrically connected to the connection unit 208 of the main circuit board 200 by way of the conversion and access unit 230 of the sub circuit board 200 to communicate with the peripheral unit of the main circuit board 200. Then, the second control signal is converted into a signal having a format compatible with the peripheral unit of the main circuit board 200 by the conversion and access unit 270 of the sub circuit board 250. Consequently, the peripheral unit of the main circuit board 200 is accessed and controlled by the conversion and access unit 270 of the sub circuit board 250 in accordance with the converted signal.

Alternatively, the main circuit board may comprise another peripheral unit compatible with the CPU 251 of the sub circuit board 250. In this case, the bus control unit 280 of the sub circuit board 250 selects the first way, in which the second CPU 251 of the sub circuit board 250 is directly electrically connected to the connection unit 208 of the main circuit board 200 to communicate with the peripheral unit of the main circuit board 200. Then the second CPU 251 of the sub circuit board 250 can directly access and control the peripheral unit of the main circuit board 200 without converting the second control signal.

As described above, the different sub circuit boards 210 and 250 are provided and replaced with each other in the present invention, so that the electronic circuit can change the type of CPU with ease. Furthermore, it will accomplish development of the electronic circuit having a variety of CPUs without any wasted efforts.

More specifically, the sub circuit board 210 and the main circuit board 200 of the circuit board shown in FIG. 5 has already tested and validated. Then, the main circuit board 200 in the validated electronic circuit can be utilized for testing another sub circuit board such as the sub circuit board 250 shown in FIG. 6. This means that variety of sub circuit boards having different types of CPU can be provided for testing the electronic circuit under development and easily replaced with each other.

The electronic circuit according to the present invention, thus, has an advantage over the prior art in making it possible to reduce the processes for testing the electronic circuit under development. Furthermore, the resources of the circuit board can be adapted to different circuit boards and recycled without dumping them.

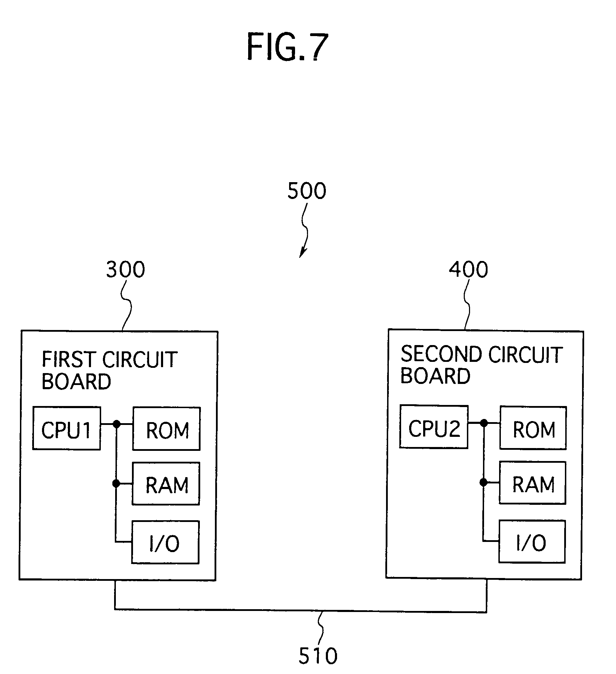

Referring to FIGS. 7 to 9 of the drawings, a third preferred embodiment of a method of controlling the electronic circuit common to various types of CPU according to the present invention will be explained hereinlater.

FIG. 7 shows a schematic block diagram of the electronic circuit 500 consisting of first and second circuit boards 300 and 400 having different types of CPU from each other. As shown in FIG. 7, the first circuit board 300 is electrically coupled with the second circuit board 400 through a cable 510.

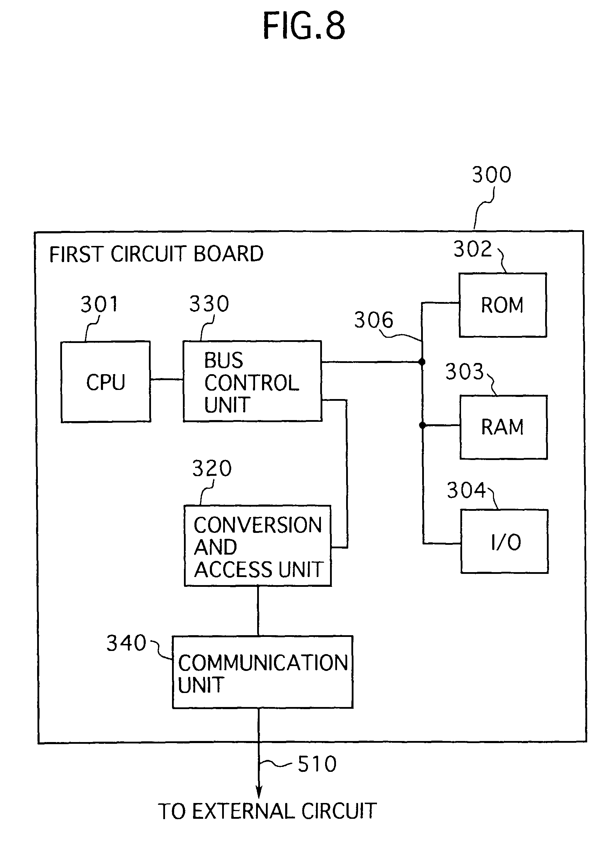

FIG. 8 shows a block diagram of the first circuit board 300 forming part of the electronic circuit 500 shown in FIG. 7. The first circuit board 300 comprises a CPU 301, a ROM 302, a RAM 303 and an I/O 304, a conversion and access unit 320, a bus control unit 330 and a communication unit 340. The ROM 302, the RAM 303 and the I/O 304 of the first circuit board 300 are electrically connected with each other through an internal bus 306 and collectively referred to as "a peripheral unit" hereinlater. The peripheral unit of the first circuit board 300 is the same as that of the electronic circuit 100 of the first embodiment, therefore, the detailed descriptions of the peripheral unit of the first circuit board 300 are omitted herein. The internal bus 306 of the first circuit board 300 has a plurality of buses such as an address bus, a data bus and a control bus, each of the busses having a plurality of lines, but the internal bus 306 of the first circuit board 300 is designated in FIG. 8 as a simple line.

The CPU 301 of the first circuit board 300 is operable to execute a predetermined program previously stored in the ROM 302 of the first circuit board 300 to issue a predetermined control signal to peripheral unit of the first circuit board 300 in order to perform desired functions in cooperation with the peripheral unit of the first circuit board 300. In this embodiment, the CPU 301 of the first circuit board 300 is assumed to be a "Pentium" model.

The communication unit 340 of the first circuit board 300 is electrically connected to another external electronic circuit, i.e., the second circuit board 400 as shown in FIG. 7, through the cable 510. The communication unit 340 is designed to allow the CPU 301 of the first circuit board 300 to communicate with the peripheral unit of the external electronic circuit.

The conversion and access unit 320 of the first circuit board 300 is electrically connected to the CPU 301 of the first circuit board 300 to receive the control signal from the CPU 301 of the first circuit board 300. The conversion and access unit 320 of the first circuit board 300 is designed to convert the received control signal into a predetermined common control signal. The conversion and access unit 320 of the first circuit board 300 is operable to access and control the peripheral unit of the first circuit board 300 in accordance with the converted control signal.

The bus control unit 330 of the first circuit board 300 is electrically connected to the CPU 301, the peripheral unit and the conversion and access unit 320 of the first circuit board 300 through the internal bus 306. The bus control unit 330 of the first circuit board 300 is designed to select one from among two ways consisting of a first way in which the CPU 301 of the first circuit board 300 is electrically connected to the peripheral unit of the first circuit board 300, and a second way in which the CPU 301 of the first circuit board 300 is electrically connected to the external electronic circuit by way of the conversion and access unit 320 of the first circuit board 300 and the communication unit 340 of the first circuit board 300. The bus control unit 330 and the conversion and access unit 320 of the first circuit board 300 may be implemented by a programmable device such as a field programmable gate array.

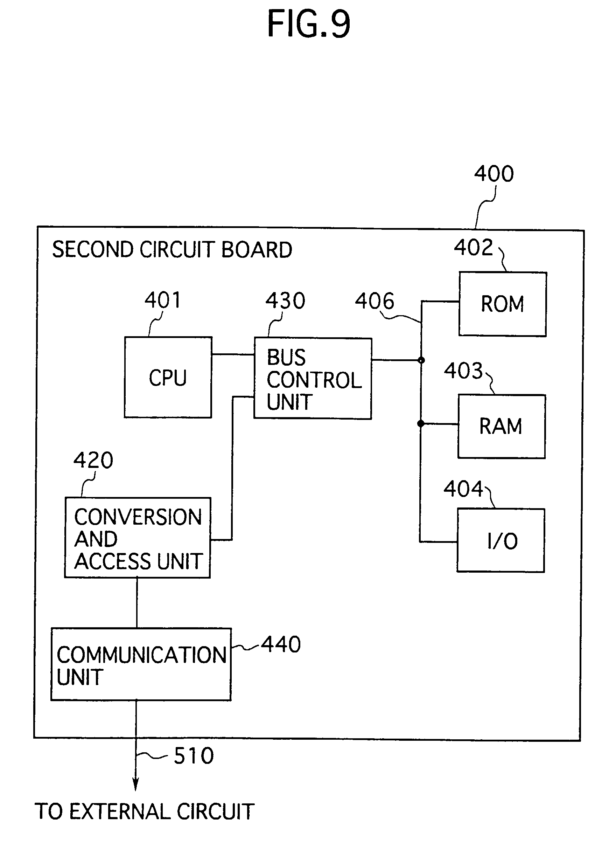

FIG. 9 shows a block diagram of the second circuit board 400 forming part of the electronic circuit 500 shown in FIG. 7. The second circuit board 400 comprises a CPU 401, a ROM 402, a RAM 403 and an I/O 404, a conversion and access unit 420, a bus control unit 430 and a communication unit 440. The ROM 402, the RAM 403 and the I/O 404 of the second circuit board 400 are electrically connected with each other through an internal bus 406 and collectively referred to as "a peripheral unit" hereinlater. The peripheral unit of the second circuit board 400 is the same as that of the electronic circuit 100 of the first embodiment, therefore, the detailed explanations of the peripheral unit of the second circuit board 400 are omitted herein. The internal bus 406 of the second circuit board 400 has a plurality of buses such as an address bus, a data bus and a control bus. Each of the busses has a plurality of lines, but the internal bus 406 of the second circuit board 400 is designated in FIG. 8 as a simple line.

The CPU 401 of the second circuit board 400 is operable to execute a predetermined program previously stored in the ROM 402 of the second circuit board 400 to issue a predetermined control signal to the peripheral unit of the second circuit board 400 in order to perform desired functions in cooperation with the peripheral unit of the second circuit board 400. In this embodiment, the CPU 401 of the second circuit board 400 is assumed to be a "8086" model.

The communication unit 440 of the second circuit board 400 is electrically connected to another external electronic circuit, i.e., the first circuit board 300 shown in FIG. 7. The communication unit 440 is designed to allow the peripheral unit of the second circuit board 400 to communicate with the CPU of the external electronic circuit.

The conversion and access unit 420 of the second circuit board 400 is electrically connected to the communication unit 440 of the second circuit board 400 to receive a signal from the external electronic circuit. In this embodiment, the received control signal is assumed to be a predetermined common control signal which is the same as the common control signal is produced by the conversion and access unit 420 of the second circuit board 400. The conversion and access unit 420 of the second circuit board 400 is designed to convert the received common control signal into a control signal having a format compatible with the peripheral unit of the second circuit board 400. The conversion and access unit 420 of the second circuit board 400 is operable to access and control the peripheral unit of the second circuit board 400 in accordance with the converted common control signal.

The bus control unit 430 of the second circuit board 400 is electrically connected to the CPU 401, the conversion and access unit 420 and the peripheral unit of the second circuit board 400. The bus control unit 430 of the second circuit board 400 is designed to select one from among two ways consisting of a first way in which the peripheral unit of the second circuit board 400 is electrically connected to the CPU 401 of the second circuit board 400, and a second way in which the peripheral unit of the second circuit board 400 is electrically connected to the CPU of the external electronic circuit by way of the conversion and access unit 420 of the second circuit board 400 and the communication unit 440 of the second circuit board 400. The bus control unit 430 and the conversion and access unit 420 of the second circuit board 400 may be implemented by a programmable device such as a field programmable gate array.

Alternatively, all of the bus control units, the conversion and access units in the first and second circuit boards 300 and 400 may be integrally formed by the programmable device.

The operation of the electronic circuit 500 thus constructed will be explained in detail hereinlater. In this embodiment, the second circuit board 400 is firstly tested. At this time, the second circuit board 400 is not connected with the first circuit board 300, i.e., stands alone. The bus control unit 430 of the second circuit board 400 selects the first way to directly electrically connect the CPU 401 of the second circuit board 400 to the peripheral unit of the second circuit board 400. The peripheral unit of the second circuit board 400 is accessed and controlled by the CPU 401 of the second circuit board 400 in accordance with the control signal.

Secondly, the first circuit board 300 is tested. In this case, the first circuit board 300 and the second circuit board 400 are coupled with each other through the cable 510 as shown in FIG. 7. The bus control unit 330 of the first circuit board 300 selects the second way to connect the CPU 301 of the first circuit board 300 to the peripheral unit of the external electronic circuit, i.e., the peripheral unit of the second circuit board 400. The bus control unit 430 of the second circuit board 400 also selects the second way to connect the peripheral unit of the second circuit board 400 to the CPU of the external circuit, i.e., the CPU 301 of the first circuit board 300.

Therefore, the CPU 301 of the first circuit board 300 can access and control the validated peripheral unit of the second circuit board 400 through the cable 510 instead of its peripheral unit of the first circuit board 300 which has not tested yet.

More specifically, the CPU 301 of the first circuit board 300 issues the control signal having a format compatible with the peripheral unit of the first circuit board 300 and incompatible with the peripheral unit of the second circuit board 400. The control signal is received by the conversion and access unit 320 of the first circuit board 300 through the bus control unit 330 of the first circuit board 300, and converted into the common control signal by the conversion and access unit 320 of the first circuit board 300. The converted common control signal is transmitted from the communication unit 340 of the first circuit board 300 to the second circuit board 400 through the cable 510.

The common control signal is received by the conversion and access unit 420 of the second circuit board 400 through the communication unit 440 of the second circuit board 400. The common control signal is converted into the control signal having a format compatible with the peripheral unit of the second circuit board 400 by the conversion and access unit 420 of the second circuit board 400. As a result, the CPU 301 of the first circuit board 300 can access and control the peripheral unit of the second circuit board 400.

It will be understood from the above descriptions that the validated second circuit board 400 is useful for testing the operation of the CPU 301 of the first circuit board 300 instead of using the peripheral unit of the first circuit board 300. Finally, the first circuit board 300 is disconnected from the second circuit board 400. The bus control unit 330 of the first circuit board 300 selects the first way to directly electrically connect the CPU 301 of the first circuit board 300 to the peripheral unit of the first circuit board 300 to be tested.

Alternatively, the conversion and access unit 320 of the first circuit board 300 may receive the common control signal from the external electronic circuit and convert the received common control signal into a control signal having a format compatible with the peripheral unit of the first circuit board 300 in addition to the aforementioned operation. The conversion and access unit 420 of the second circuit board 400 may also receive the control signal from the CPU 401 of the circuit board 400 and convert the received control signal into the common control signal in addition to the aforementioned operation. In the electronic circuit 500 thus constructed, the validated CPU 401 of the second circuit board 400 can be used for testing the peripheral unit of the first circuit board 300. This results in the fact that the circuit board according to the present invention, which has been tested and validated, can be utilized for testing another circuit board. The method of testing the another circuit board can be divided into a plurality of stages including a first stage in which the CPU of the another circuit board is tested by using the peripheral unit of the validated circuit board, a second stage in which the peripheral unit of the another circuit board is tested by using the CPU of the validated circuit board and a third stage in which the another circuit board is comprehensively tested in the CPU and the peripheral unit. This results in the fact that it becomes easy to find and investigate errors in the circuit board.

The third embodiment of the method of controlling electronic circuit according to the present invention has an advantage over the prior art in making it possible to reduce the time for testing the electronic circuit, because of the fact that the test for the electronic circuit can effectively proceed step by step. Furthermore, in this embodiment, different electronic circuits communicate with each other in accordance with the predetermined common control signal which is compatible with any electronic circuits according to the present invention, so that the electronic circuit can be operated without paying the types of control signal and CPU.

The many features and advantages of the invention are apparent from the detailed specification, and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described herein, and accordingly, all suitable modifications and equivalents may be construed as being encompassed within the scope of the invention.

## Claims

1. An electronic circuit (100; 200, 210, 250; 500, 300, 400) common to various types of processing unit, comprising:
a processing unit (101, 111; 211, 251; 301, 401) being capable of issuing a predetermined control signal to a peripheral unit (102, 103, 104; 202, 203, 204; 302, 303, 304, 402, 403, 404);
conversion means (120; 220, 270; 320, 420) for receiving said control signal from said processing unit (101, 111; 211, 251; 301, 401) and converting the received control signal into a signal having a format compatible with said peripheral unit (102, 103, 104; 202, 203, 204; 302, 303, 304, 402, 403, 404); and
accessing means (120; 220; 270; 320, 420) for accessing and controlling said peripheral unit (102, 103, 104; 202, 203, 204; 302, 303, 304, 402, 403, 404) in accordance with the signal converted by said conversion means (120; 220, 270; 320, 420).

2. An electronic circuit (200; 500, 400) as set forth in claim 1, further comprising communication means (208; 440) for allowing said peripheral unit (202, 203, 204; 402, 403, 404) to communicate with another processing unit (211, 251; 301) which is accommodated in an external electronic circuit (210, 250; 300).

3. An electronic circuit (210, 250; 500, 300) as set forth in claim 1, further comprising communication means (208; 340) for allowing said processing unit (211, 251; 301) to communicate with another peripheral unit (202, 203, 204; 402, 203, 404) which is accommodated in an external electronic circuit (200; 400).

4. An electronic circuit (100; 200, 210, 250; 500, 300, 400) common to various types of processing unit, comprising:
a first processing unit (101; 211; 401) being capable of issuing a first predetermined control signal to a peripheral unit (102, 103, 104; 202, 203, 204; 402, 403, 404) to access and control said peripheral unit (102, 103, 104; 202, 203, 204; 402, 403, 404) in accordance with said first control signal;
a second processing unit (111; 251; 301) being capable of issuing a second predetermined control signal;
conversion means (120; 220, 270; 320) for receiving said second control signal from said second processing unit (111; 251; 301) and converting the received second control signal into a signal having a format compatible with said peripheral unit (102, 103, 104; 202, 203, 204; 402, 403, 404);
accessing means (120; 220, 270; 320) for accessing and controlling said peripheral unit (102, 103, 104; 202, 203, 204; 402, 403, 404) in accordance with the signal converted by said conversion means (120; 220, 270; 320); and
selecting means (130; 230, 280; 330) for selecting one from among said first and second processing units (101, 111; 211, 251; 301, 401) to access and control said peripheral unit (102, 103, 104; 202, 203, 204; 402, 403, 404), in which the selected first processing unit (101; 211; 401) directly accesses and controls said peripheral unit (102, 103, 104; 202, 203, 204; 402, 403, 404) when said first processing unit is selected by said selecting means (130; 230, 280; 330), and said accessing means (120; 220, 270; 320) accesses and controls said peripheral unit (102, 103, 104; 202, 203, 204; 402, 403, 404) when said second processing unit (111; 251; 301) is selected by said selecting means (130; 230, 280; 330).

5. An electronic circuit (500, 400) as set forth in claim 4, further comprising communication means (440) for allowing said peripheral unit (402, 403, 404) to communicate with said second processing unit (301) which is accommodated in an external electronic circuit (300).

6. An electronic circuit (500, 300) common to various types of processing unit, comprising:
a processing unit (301) being capable of issuing a predetermined control signal to a first peripheral unit (302, 303, 304) to access and control said first peripheral unit (302, 303, 304) in accordance with said first control signal;
communication means (408) for allowing said processing unit (301) to communicate with a second peripheral unit (402, 403, 404) accommodated in an external electronic circuit (400);
conversion means (420) for receiving said control signal from said processing unit (301) and converting the received control signal into a signal having a format compatible with said second peripheral unit (402, 403, 404);
accessing means (420) for accessing and controlling said second peripheral unit (402, 403, 404) in accordance with the converted signal; and
selecting means (330) for selecting one from among said first and second peripheral units (302, 303, 304, 402, 403, 404) to be accessed and controlled by said processing unit (301), in which the selected first peripheral unit (302, 303, 304) is directly accessed and controlled by said processing unit (301) when said first peripheral unit is selected by said selecting means (330), and the selected second peripheral unit (402, 403, 404) is accessed and controlled by said accessing means (420) when said second peripheral unit (402, 403, 404) is selected by said selecting means (330).

7. A method of controlling an electronic circuit (100; 200, 210, 250; 500, 300, 400) common to various types of processing unit, said electronic circuit (100; 200, 210, 250; 500, 300, 400) comprising a processing unit (101, 111; 211, 251; 301, 401) being capable of issuing a predetermined control signal to a peripheral unit (102, 103, 104; 202, 203, 204; 302, 303, 304, 402, 403, 404), said method comprising the steps of:
(a) receiving said control signal from said processing unit (101, 111; 211, 251; 301, 401);
(b) converting the control signal received in said step (a) into a signal having a format compatible with said peripheral unit (102, 103, 104; 202, 203, 204; 302, 303, 304, 402, 403, 404); and
(c) accessing and controlling said peripheral unit (102, 103, 104; 202, 203, 204; 302, 303, 304, 402, 403, 404) in accordance with the signal converted in said step (b).

8. A method as set forth in claim 7, further comprising the step of allowing said peripheral unit (202, 203, 204; 402, 403, 404) to communicate with another processing unit (211, 251; 301) which is accommodated in an external electronic circuit (210, 250; 300).

9. A method as set forth in claim 7, further comprising the step of allowing said processing unit (211, 251; 301) to communicate with another peripheral unit (202, 203, 204; 402, 203, 404) which is accommodated in an external electronic circuit (200; 400).

10. A method of controlling an electronic circuit (100; 200, 210, 250; 500, 300, 400) common to various types of processing unit, said electronic circuit (100; 200, 210, 250; 500, 300, 400) comprising: a first processing unit (101; 211; 401) being capable of issuing a first predetermined control signal to a peripheral unit (102, 103, 104; 202, 203, 204; 402, 403, 404) to access and control said peripheral unit (102, 103, 104; 202, 203, 204; 402, 403, 404) in accordance with said first control signal; and a second processing unit (111; 251; 301) being capable of issuing a second predetermined control signal; said method comprising the steps of:
(a) receiving said second control signal from said second processing unit (111; 251; 301);
(b) converting the second control signal received in said step (a) into a signal having a format compatible with said peripheral unit (102, 103, 104; 202, 203, 204; 402, 403, 404);
(c) selecting one from among said first and second processing units (101, 111; 211, 251; 301, 401) to access and control said peripheral unit (102, 103, 104; 202, 203, 204; 402, 403, 404);
(d) directly accessing and controlling said peripheral unit (102, 103, 104; 202, 203, 204; 402, 403, 404) in accordance with said first control signal, when said first processing unit (101; 211; 401) is selected in said step (c); and
(e) accessing and controlling said peripheral unit (102, 103, 104; 202, 203, 204; 402, 403, 404) in accordance with the signal converted in said step (b), when said second processing unit (111; 251; 301) is selected in said step (c).

11. A method as set forth in claim 10, further comprising the step of allowing said peripheral unit (402, 403, 404) to communicate with said second processing unit (301), which is accommodated in an external electronic circuit (300).

12. A method of controlling an electronic circuit (500, 300) common to various types of processing unit, said electronic circuit (500, 300) comprising a processing unit (301) being capable of issuing a predetermined control signal to a first peripheral unit (302, 303, 304) to access and control said first peripheral unit (302, 303, 304) in accordance with said first control signal, said method comprising the steps of:
(a) allowing said processing unit (301) to communicate with a second peripheral unit (402, 403, 404) accommodated in an external electronic circuit (400);
(b) receiving said control signal from said processing unit (301);
(a) converting the control signal received in said step (b) into a signal having a format compatible with said second peripheral unit (402, 403, 404);
(d) selecting one from among said first and second peripheral units (302, 303, 304, 402, 403, 404) to be accessed and controlled by said processing unit (301).
(e) directly accessing and controlling said first peripheral unit (302, 303, 304) in accordance with said first control signal, when said first peripheral unit (302, 303, 304) is selected in said step (d); and
(f) accessing and controlling said second peripheral unit (402, 403, 404) in accordance with the signal converted in said step (b), when said second peripheral unit (402, 403, 404) is selected in said step (d).

13. A program storage device stored with a program executed by a computer to perform a method of controlling an electronic circuit (100; 200, 210, 250; 500, 300, 400) common to various types of processing unit, said electronic circuit (100; 200, 210, 250; 500, 300, 400) comprising a processing unit (101, 111; 211, 251; 301, 401) being capable of issuing a predetermined control signal to a peripheral unit (102, 103, 104; 202, 203, 204; 302, 303, 304, 402, 403, 404), said program comprising the steps of:
(a) receiving said control signal from said processing unit (101, 111; 211, 251; 301, 401);
(b) converting the control signal received in said step (a) into a signal having a format compatible with said peripheral unit (102, 103, 104; 202, 203, 204; 302, 303, 304, 402, 403, 404); and
(c) accessing and controlling said peripheral unit (102, 103, 104; 202, 203, 204; 302, 303, 304, 402, 403, 404) in accordance with the signal converted in said step (b).

14. A program storage device as set forth in claim 13, in which said program further comprising the step of allowing said peripheral unit (202, 203, 204; 402, 403, 404) to communicate with a processing unit (211, 251; 301) which is accommodated in an external electronic circuit (210, 250; 300).

15. A program storage device as set forth in claim 13, in which said program further comprising the step of allowing said processing unit (211, 251; 301) to communicate with another peripheral unit (202, 203, 204; 402, 203, 404) which is accommodated in an external electronic circuit (200; 400).

16. A program storage device stored with a program executed by a computer to perform a method of controlling an electronic circuit (100; 200, 210, 250; 500, 300, 400) common to various types of processing unit, said electronic circuit (100; 200, 210, 250; 500, 300, 400) comprising: a first processing unit (101; 211; 401) being capable of issuing a first predetermined control signal to a peripheral unit (102, 103, 104; 202, 203, 204; 402, 403, 404) to access and control said peripheral unit (102, 103, 104; 202, 203, 204; 402, 403, 404) in accordance with said first control signal; and a second processing unit (111; 251; 301) being capable of issuing a second predetermined control signal; said program comprising the steps of:
(a) receiving said second control signal from said second processing unit (111; 251; 301);
(b) converting the second control signal received in said step (a) into a signal having a format compatible with said peripheral unit (102, 103, 104; 202, 203, 204; 402, 403, 404);
(c) selecting one from among said first and second processing units (101, 111; 211, 251; 301, 401) to access and control said peripheral unit (102, 103, 104; 202, 203, 204; 402, 403, 404);
(d) directly accessing and controlling said peripheral unit (102, 103, 104; 202, 203, 204; 402, 403, 404) in accordance with said first control signal, when said first processing unit (101; 211; 401) is selected in said step (c); and
(e) accessing and controlling said peripheral unit (102, 103, 104; 202, 203, 204; 402, 403, 404) in accordance with the signal converted in said step (b), when said second processing unit (111; 251; 301) is selected in said step (c).

17. A program storage device as set forth in claim 16, in which said program further comprising the step of allowing said peripheral unit (402, 403, 404) to communicate with said second processing unit (301) which is accommodated in an external electronic circuit (300).

18. A program storage device stored with a program executed by a computer to perform a method of controlling an electronic circuit (500, 300) common to various types of processing unit, said electronic circuit (500, 300) comprising a processing unit (301) being capable of issuing a predetermined control signal to a first peripheral unit (302, 303, 304) to access and control said first peripheral unit (302, 303, 304) in accordance with said first control signal, said program comprising the steps of:
(a) allowing said processing unit (301) to communicate with a second peripheral unit (402, 403, 404) accommodated in an external electronic circuit (400);
(b) receiving said control signal from said processing unit (301);
(c) converting the control signal received in said step (b) into a signal having a format compatible with said second peripheral unit (402, 403, 404);
(d) selecting one from among said first and second peripheral units (302, 303, 304, 402, 403, 404) to be accessed and controlled by said processing unit (301);
(e) directly accessing and controlling said first peripheral unit (302, 303, 304) in accordance with said first control signal, when said first peripheral unit (302, 303, 304) is selected in said step (d); and
(f) accessing and controlling said second peripheral unit (402, 403, 404) in accordance with the signal converted in said step (b), when said second peripheral unit (402, 403, 404) is selected in said step (d).
